(19)

Europäisches
Patentamt
European
Patent Office
Office européen
des brevets

(11) **EP 4 414 962 A1**

(12) **EUROPEAN PATENT APPLICATION**

(43) Date of publication:
**14.08.2024 Bulletin 2024/33**

(21) Application number: **23461512.8**

(22) Date of filing: **08.02.2023**

(51) International Patent Classification (IPC):
**G08G 1/015** [(2006.01)]    **G01V 8/22** [(2006.01)]
**G08G 1/017** [(2006.01)]    **G08G 1/04** [(2006.01)]
**G08G 1/042** [(2006.01)]    **G08G 1/08** [(2006.01)]

(52) Cooperative Patent Classification (CPC):
**G08G 1/08; G08G 1/015; G08G 1/017;
G08G 1/0175; G08G 1/04; G08G 1/042;** G01V 3/08;
G01V 8/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Uniwersytet Zielonogórski
65-417 Zielona Góra (PL)**

(72) Inventors:
• **Paczkowski, Jacek
  67-100 Nowa Sol (PL)**

• **Ostrowski, Kacper
  65-533 Zielona Gora (PL)**
• **Kramek, Krzysztof
  65-124 Zielona Gora (PL)**
• **Mrugalski, Marcin
  65-128 Zielona Gora (PL)**

(74) Representative: **JD&P Patent Attorneys
Joanna Dargiewicz & Partners
ul. Mysliborska 93A/50
03-185 Warszawa (PL)**

(54) **METHOD AND SYSTEM OF CONTROLLING TRAFFIC AT ROAD INTERSECTIONS**

(57) The invention discloses a method of controlling traffic at a road intersection of at least two roads comprising the following steps: check if there are any vehicles on the first road (NS) that are already in or approaching the intersection; check if there are any vehicles on the second road (WE) that are already in or approaching the intersection; if there are vehicles on the first road (NS) and no vehicles on the second road (WE), light a green light for the first road (NS) and the a light for the second road (WE); if there are no vehicles on the first road (NS) and there are vehicles on the second road (WE), light a green light for the second road (WE) and a red light for the first road (NS); if vehicles are on both the first road (NS) and the second road (WE), calculate the estimated negative environmental impact of the detected vehicles on the first road - ENS for the first road (NS) and EWE for the second road (WE); if ENS > EWE, light a green light for the first road (NS) and a red light for the second road (WE); if ENS < EWE, light a green light for the second road (WE) and a red light for the first road (NS); if ENS=EWE then leave the lights unchanged; start counting the time; if the counted time is greater than the maximum time for a one road and there are waiting vehicles on the perpendicular road, change the lights to the opposite; start counting the time; if the time counted is greater than the maximum time for one road but there are no vehicles on the perpendicular road. The invention further discloses a system implementing this method.

Fig. 1

EP 4 414 962 A1

**Description**

The present invention relates to a method and system of controlling traffic at road intersections that minimises exhaust emissions.

Currently, traffic control at intersections is either based on equal opening times for each direction or the times vary due to higher traffic volumes in one direction.

UK patent application GB2605991A discloses a modern intersection traffic control system based on neural networks. The application discloses a device of controlling traffic at an intersection that has a neural network architecture for prioritising a set of connected vehicles present at an intersection and a trajectory conflict engine for receiving priorities for a set of connected vehicles present at an intersection and for determining timing data for the occupancy of intersection boundary points that avoids collisions between a set of connected vehicles. The neural network architecture maps the intersection lane observation tensor to the intersection lane priority tensor. The observation tensor contains kinematic data for the vehicles in the lanes of the intersection. The device uses the synchronisation data to instruct the movement of a set of connected vehicles through the intersection.

Chinese patent application CN114419896A discloses a system that adapts to the situation at an intersection, however, it does not take into account differences between vehicles caused by different emissions. The invention discloses a method, device and equipment for controlling traffic lights based on the Digital Twin model, i.e. the combination of a physical object and its digital representation in a virtual space, and relates to the field of intelligent traffic technology. The method includes steps in which modelling of the environment according to the Digital Twin technology is carried out, dynamic elements located in the modelled environment are identified, and the modelled environment includes a target intersection, an upstream or downstream intersection of the target intersection and a road between the target intersection and the upstream or downstream intersection, and the dynamic elements include at least one of motor vehicles, non-motor vehicles and pedestrians. According to the modelled environment and dynamic elements, the number and movement direction of the target dynamic elements that will reach the target intersection in the next instant are predicted; and it is evaluated whether the original control scheme of the target intersection signalling in the next instant is reasonable; and if not, a target control scheme is generated and the target intersection signalling is controlled according to the target control scheme in the next instant. According to the scheme, the traffic lights can be intelligently adjusted and controlled and the efficiency of crossing the intersection can be improved.

However, none of the known solutions take into account the emissions of vehicles passing through a road intersection and allow traffic to be controlled at the intersection in such a way as to minimise vehicle fuel consumption and thus reduce emissions within the intersection.

The object of the present invention is to optimise the routing of traffic at a road intersection so as to minimise vehicle fuel consumption and at the same time minimise exhaust emissions.

Thus, the present invention relates to a method of controlling traffic at a road intersection of at least two roads comprising the following steps:

a) check if there are any vehicles on the first road (NS) that are already in or approaching the intersection;

b) check if there are any vehicles on the second road (WE) that are already in or approaching the intersection;

c) if there are vehicles on the first road (NS) and no vehicles on the second road (WE), light a green light for the first road (NS) and the a light for the second road (WE);

d) if there are no vehicles on the first road (NS) and there are vehicles on the second road (WE), light a green light for the second road (WE) and a red light for the first road (NS);

e) if vehicles are on both the first road (NS) and the second road (WE), calculate the estimated negative environmental impact of the detected vehicles on the first road - ENS for the first road (NS) and EWE for the second road (WE):

$$ENS = \sum_{i=1}^{n} w_i$$

where: $n$ - number of detected vehicles on the first road (NS), $w_i$ - weight related to emissions for a given vehicle;

$$EWE = \sum_{j=1}^{m} w_j$$

where: $m$ - number of detected vehicles on the second road (WE), $w_j$ - weight related to emissions for a given vehicle;

f) if ENS > EWE, light a green light for the first road (NS) and a red light for the second road (WE);

g) if ENS < EWE, light a green light for the second road (WE) and a red light for the first road (NS);

h) if ENS=EWE then leave the lights unchanged;

i) start counting the time;

j) if the counted time is greater than the maximum time for a one road and there are waiting vehicles on the perpendicular road, change the lights to the opposite;

k) start counting the time and return to point a);

l) if the time counted is greater than the maximum time for one road but there are no vehicles on the perpendicular road, return to point a).

Preferably, the method is characterized in that $n$ or $m$ - the number of detected vehicles on a given road and $w$ - the weight related to the emission of harmful substances for a given vehicle is determined using a detection system based on a system examining the axle load of the vehicle on the road. Preferably, the method is characterised in that $n$ or $m$ - the number of detected vehicles on a given road and $w$ - the weight related to the emission of harmful substances for a given vehicle is determined using a detection system based on inductive detectors hidden in the roadway. Preferably, the method is characterised in that $n$ or $m$ - the number of detected vehicles on a given road and $w$ - the weight related to the emission of harmful substances for a given vehicle is determined using a detection system based on two-level optical barriers, in which the lower level detects all vehicles and the higher level detects only trucks and buses. Preferably, the method is characterised in that n or $m$ - the number of detected vehicles on a given road and $w$ - the weight related to the emission of harmful substances for a given vehicle is determined using a detection system based on a multi-element optical barrier allowing to measure the height of the vehicle and to identify the vehicle type on this basis. Preferably, the method is characterised in that $n$ or $m$ - the number of detected vehicles on a given road and $w$ - the weight related to the emission of harmful substances for a given vehicle is determined using a detection system based on cameras with software for recognising vehicle types. Preferably, the method is characterised in that $n$ or $m$ - the number of detected vehicles on a given road and $w$ - the weight related to the emission of harmful substances for a given vehicle is determined using a detection system based on cameras recognising license plates (registration numbers) and extracting data from a database of registered vehicles Preferably the method is characterised in that the $w$ - weight related to the emissions of the vehicle is determined using the following system of values:

| Number | Vehicle type | Control value - weight |
|--------|--------------|------------------------|
| 1 | motorbike | 1 |
| 2 | passenger car, minivan | 2 |
| 3 | SUV | 3 |
| 4 | off-road vehicle | 4 |
| 5 | van, large van | 6 |
| 6 | truck, bus | 8 |
| 7 | tractor unit with semi-trailer | 10 |

More preferably, the method is characterised in that either the estimated exhaust emissions or the sum of the weights is calculated if traffic is stopped in each direction and the green light is switched on in the direction where the estimated exhaust emissions are higher.

Additionally the present invention relates to a system of controlling traffic at road intersections including:

- a detection system that determines the number of detected vehicles on a given road and/or $w$ - weight related to the emissions of a given vehicle;
- a computing unit for calculating the estimated negative environmental impact detected by the vehicle detection system at each road crossing;
- a traffic light control unit for controlling the traffic lights on the basis of data obtained from the computing unit.

Preferably, the system is characterised in that the detection system determining the number of detected vehicles on a given road and/or $w$ - weight related to the emission of harmful substances for a given vehicle is based on a system examining the axle load of the vehicle on the road either on inductive detectors hidden in the roadway or on two-level optical barriers, in which the lower level detects all vehicles, and the higher level detects only lorries and buses, or a multi-element optical barrier to measure the height of the vehicle and identify the vehicle type on this basis, or cameras with software that recognises vehicle types, or cameras that recognise license plates (registration numbers) and extract data from a database of registered vehicles. More preferably, the system is characterized in that it implements a method of controlling traffic disclosed above.

It is possible to optimise traffic management at the intersection in such a way as to minimise vehicle fuel consumption, i.e. at the same time minimise exhaust emissions.

If there are vehicles approaching the intersection from two directions, the control system should assess which vehicles these are (cars, vans, lorries, buses) and give priority to the heavy vehicles, which will otherwise have to stop and then accelerate, emitting a great deal of harmful substances.

Generalizing, it is necessary to estimate for each direction what the emissions will be for each possible variant and to choose the solution that is the least environmentally harmful.

Only vehicles approaching the intersection are taken into account, those moving away from the intersection are ignored as the traffic control lights no longer affect them.

The solution according to the present invention is an extension of existing systems with such a way to direct traffic at an intersection so that vehicles passing through the intersection emit the minimum possible amount of harmful substances. It is not important how the control system is constructed, with which components, whether it uses neural networks or classical processors. The method according to the present invention defines guidelines for the control system for traffic lights at an intersection. It determines which direction should have a green light at any given time and why. The method to select the direction (the axis of the intersection) is very simple and requires the determination of the type of vehicles approaching the intersection and their number. The inventors propose several methods for determining the type of vehicle and a great simplification of the algorithm by assigning numerical values (weights) to the different categories of vehicles, which can be used instead of information on the emissions of the type of vehicle. Such a solution is less accurate but easier to implement and feasible on hardware platforms with very low computational capabilities.

The implementation example assumes that one axis of the intersection is in the North-South (NS) direction and the other in the West- East (WE) direction.

It is necessary to estimate what the harmful emissions will be for two variants: the NS axis has priority or the WE axis has priority. This can be done by assessing which vehicles are approaching the intersection and extracting emissions information from the database for starting and accelerating these specific vehicle models. This is, however, cumbersome because recognition of the make and model of the vehicle will require either complex optical systems and vehicle identification software or the installation of a transponder in the vehicles, which will provide its data on request, including emissions during starting and acceleration. Another possible option would be to recognise the number plates and retrieve the make and model of the vehicle, engine, etc. from the vehicle database.

To simplify the calculations, we can adopt control values (weights) for individual vehicle types to describe their environmental impact, e.g:

| Number | Vehicle type | Control value - weight |
|---|---|---|
| 1 | motorbike | 1 |
| 2 | passenger car, minivan | 2 |
| 3 | SUV | 3 |
| 4 | off-road vehicle | 4 |
| 5 | van, large van | 6 |

(continued)

| Number | Vehicle type | Control value - weight |
|--------|--------------|------------------------|
| 6 | truck, bus | 8 |
| 7 | tractor unit with semi-trailer | 10 |

The control values (weights) given are examples. The control values used in the practical implementation may be different in order to better reflect the proportion of exhaust emissions related to the motorbike emissions. Similarly, seven vehicle types are given in this implementation example, but more can be defined.

The situation at the intersection is dynamic, which may result in a recommendation to change the axis having priority after one or two vehicles have passed. In order to prevent this, it should be assumed that the direction with priority at any given time will remain open for a minimum opening time of direction $T_{min}$ (e.g. 3 minutes). An exception to this rule would be when all vehicles on the axis having priority have already passed through the intersection, in which case a red light should be switched on that axis and a green light on the transversal axis and left in this state for $T_{min}$.

An example of the implementation of the invention is shown in the figures of the figure, where:

Fig. 1 shows the first set of vehicles at a road intersection;

Fig. 2 shows a second set of vehicles at a road intersection.

**Example**

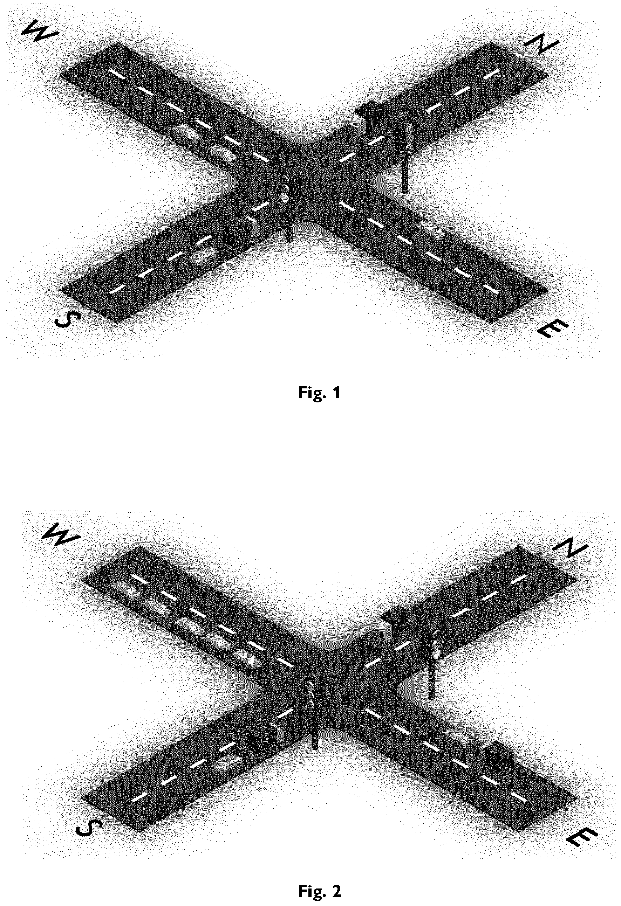

In the first set of vehicles shown in Fig. 1, the NS axis has two trucks and one passenger car, while the WE axis has three passenger cars.

Direction NS

$$E_{NS} = 2*8+1*2 = 18$$

Direction WE

$$E_{WE} = 3*2 = 6$$

Therefore, the NS axis takes precedence because

$$E_{NS} > E_{WE}$$

In the second set of vehicles shown in Fig. 2, the NS axis has two trucks and one passenger car, while the WE axis has six passenger cars and one truck.

Direction NS

$$E_{NS} = 2*8+1*2 = 18$$

Direction WE

$$E_{WE} = 6*2+1*8 = 20$$

Therefore, priority is given to the WE axis

$$E_{NS} < E_{WE}$$

The method according to the present invention is implemented by the following steps:

1. Check if there are any vehicles on the NS axis (approaching the intersection).

2. Check if there are any vehicles on the WE axis (approaching the intersection).

3. If there are vehicles on the NS axis and no vehicles on the WE axis, light green for NS and red light for WE.

4. If there are no vehicles on the NS axis and there are vehicles on the WE axis, light green for WE and red light for NS.

5. If vehicles are on both the NS and WE axle then calculate the estimated negative environmental impact of the detected vehicles on each axle (ENS and EWE):

$$ENS = \sum_{i=1}^{n} w(vehicle\ type_i)$$

where: n - the number of detected vehicles on the NS axis, w - the weight assigned to the type of vehicle;

$$EWE = \sum_{j=1}^{m} w(vehicle\ type_j)$$

where: m - number of detected vehicles on the WE axle, w - weight attributed to a given type of vehicle.

6. If ENS > EWE then light a green light for the NS axis and a red light for the WE axis.

7. If ENS < EWE then light a green light for the WE axis and a red light for the NS axis.

8. Start counting the time.

9. If ENS=EWE then leave the lights unchanged.

10. If the counted time is greater than the maximum time for one axis and there are vehicles waiting on the perpendicular axis then change the lights to the opposite.

11. Start timing and return to step 1.

12. If the counted time is greater than the maximum time for one axis but there are no vehicles on the perpendicular axis, return to point 1.

If, in the next cycle, the direction of the intersection opening is to remain the same as before then it is necessary to check how long this condition has already lasted and if it is longer than $T_{max}$ then, even though the calculations show that the same direction at the intersection should be opened again, the cross direction should be opened. This should be done out of concern for the mental state of drivers who have a red light for a long time. Their irritation can push them into behaviour that is dangerous for them and for other road users.

According to the invention, the access roads to the intersection must be equipped with a detection system that counts the vehicles approaching the intersection and identifies their type. Such a detection system can be based on:

- a system that tests the vehicle's axle load on the road;

- inductive detectors hidden in the roadway;

- two-level optical barriers (the lower level detects all vehicles, the higher level only trucks and buses);

- a multi-element optical barrier to measure the height of the vehicle and identify the vehicle type on this basis;

- cameras with software that recognises vehicle types;

- cameras that recognise license plates (registration numbers) and retrieve data from a database of registered vehicles.

The traffic control system at road intersections is supposed to calculate the estimated emissions (or the sum of the weights) if traffic is stopped in each direction and turn on the green light in the direction where the estimated emissions are higher.

The traffic control system at road intersections is supposed to measure the time since the last traffic light change and change it to a perpendicular direction to avoid upsetting drivers who wait too long, even if this means increased emissions for a while.

**Claims**

1. A method of controlling traffic at a road intersection of at least two roads comprising the following steps:

   a) check if there are any vehicles on the first road (NS) that are already in or approaching the intersection;
   b) check if there are any vehicles on the second road (WE) that are already in or approaching the intersection;
   c) if there are vehicles on the first road (NS) and no vehicles on the second road (WE), light a green light for the first road (NS) and the a light for the second road (WE);
   d) if there are no vehicles on the first road (NS) and there are vehicles on the second road (WE), light a green light for the second road (WE) and a red light for the first road (NS);
   e) if vehicles are on both the first road (NS) and the second road (WE), calculate the estimated negative environmental impact of the detected vehicles on the first road - ENS for the first road (NS) and EWE for the second road (WE):

$$ENS = \sum_{i=1}^{n} w_i$$

   where: $n$ - number of detected vehicles on the first road (NS), $w_i$ - weight related to emissions for a given vehicle;

$$EWE = \sum_{j=1}^{m} w_j$$

   where: $m$ - number of detected vehicles on the second road (WE), $w_j$ - weight related to emissions for a given vehicle;

   f) if ENS > EWE, light a green light for the first road (NS) and a red light for the second road (WE);
   g) if ENS < EWE, light a green light for the second road (WE) and a red light for the first road (NS);
   h) if ENS=EWE then leave the lights unchanged;

i) start counting the time;

j) if the counted time is greater than the maximum time for a one road and there are waiting vehicles on the perpendicular road, change the lights to the opposite;

k) start counting the time and return to point a);

l) if the time counted is greater than the maximum time for one road but there are no vehicles on the perpendicular road, return to point a).

2. The method according to claim 1, **characterised in that** $n$ or $m$ - the number of detected vehicles on a given road and $w$ - the weight related to the emission of harmful substances for a given vehicle is determined using a detection system based on a system examining the axle load of the vehicle on the road.

3. The method according to claim 1, **characterised in that** $n$ or $m$ - the number of detected vehicles on a given road and $w$ - the weight related to the emission of harmful substances for a given vehicle is determined using a detection system based on inductive detectors hidden in the roadway.

4. The method according to claim 1, **characterised in that** $n$ or $m$ - the number of detected vehicles on a given road and $w$ - the weight related to the emission of harmful substances for a given vehicle is determined using a detection system based on two-level optical barriers, in which the lower level detects all vehicles and the higher level detects only trucks and buses.

5. The method according to claim 1, **characterised in that** $n$ or $m$ - the number of detected vehicles on a given road and $w$ - the weight related to the emission of harmful substances for a given vehicle is determined using a detection system based on a multi-element optical barrier allowing to measure the height of the vehicle and to identify the vehicle type on this basis.

6. The method according to claim 1, **characterised in that** $n$ or $m$ - the number of detected vehicles on a given road and $w$ - the weight related to the emission of harmful substances for a given vehicle is determined using a detection system based on cameras with software for recognising vehicle types.

7. The method according to claim 1, **characterised in that** $n$ or $m$ - the number of detected vehicles on a given road and $w$ - the weight related to the emission of harmful substances for a given vehicle is determined using a detection system based on cameras recognising license plates (registration numbers) and extracting data from a database of registered vehicles

8. The method according to claim 1, **characterised in that** the $w$ - weight related to the emissions of the vehicle is determined using the following system of values:

| Number | Vehicle type | Control value - weight |
|--------|--------------|------------------------|
| 1 | motorbike | 1 |
| 2 | passenger car, minivan | 2 |
| 3 | SUV | 3 |
| 4 | off-road vehicle | 4 |
| 5 | van, large van | 6 |
| 6 | truck, bus | 8 |
| 7 | tractor unit with semi-trailer | 10 |

9. The method according to any of the claims 1-8, **characterised in that** either the estimated exhaust emissions or the sum of the weights is calculated if traffic is stopped in each direction and the green light is switched on in the direction where the estimated exhaust emissions are higher.

10. A system of controlling traffic at road intersections including:

- a detection system that determines the number of detected vehicles on a given road and/or $w$ - weight related to the emissions of a given vehicle;
- a computing unit for calculating the estimated negative environmental impact detected by the vehicle detection system at each road crossing;
- a traffic light control unit for controlling the traffic lights on the basis of data obtained from the computing unit.

11. The system according to claim 10, **characterised in that** the detection system determining the number of detected vehicles on a given road and/or $w$ - weight related to the emission of harmful substances for a given vehicle is based on a system examining the axle load of the vehicle on the road either on inductive detectors hidden in the roadway or on two-level optical barriers, in which the lower level detects all vehicles, and the higher level detects only lorries and buses, or a multi-element optical barrier to measure the height of the vehicle and identify the vehicle type on this basis, or cameras with software that recognises vehicle types, or cameras that recognise license plates (registration numbers) and extract data from a database of registered vehicles.

12. The system according to claim 10 or 11 **characterized in that** it implements a method of controlling traffic at road intersection defined in any of the claims. 1-9.

**Fig. 1**

**Fig. 2**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/055746 A1 (TAYLOR THOMAS S [US]) 25 February 2016 (2016-02-25) | 1,6-12 | INV. G08G1/015 |
| A | * paragraph [0064] – paragraph [0068]; figure 7 * | 2-5 | G01V8/22 G08G1/017 G08G1/04 |
| X | US 2020/372793 A1 (WEIZMAN ILAN [IL]) 26 November 2020 (2020-11-26) | 1,3,6-12 | G08G1/042 G08G1/08 |
| Y | * paragraphs [0023], [0024], [0051] – paragraph [0058] * | 2 | |
| X | US 2023/031158 A1 (KAITA KEIJI [JP] ET AL) 2 February 2023 (2023-02-02) | 10 | |
| A | * paragraph [0009] – paragraphs [0012], [0019], [0026] * | 1-9,11, 12 | |
| X | US 2017/301233 A1 (WITT DENNIS [GB] ET AL) 19 October 2017 (2017-10-19) | 10 | |
| A | * paragraph [0042] – paragraph [0044] * * paragraph [0052] – paragraph [0053] * | 1-9,11, 12 | |
| Y | EP 0 155 108 A2 (MICRO TECHNOLOGY DEVELOPMENTS [GB]) 18 September 1985 (1985-09-18) * page 8, line 4 – page 9, line 13 * | 2 | TECHNICAL FIELDS SEARCHED (IPC) G08G G01V |
| A | US 2020/013280 A1 (MICOSKI MAURICIO [BR] ET AL) 9 January 2020 (2020-01-09) * the whole document * | 4,5 | |

The present search report has been drawn up for all claims

| Place of search | Date of completion of the search | Examiner |
|---|---|---|
| The Hague | 23 June 2023 | Malagoli, M |

EPO FORM 1503 03.82 (P04C01)

## ANNEX TO THE EUROPEAN SEARCH REPORT
## ON EUROPEAN PATENT APPLICATION NO.

EP 23 46 1512

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2023

| Patent document cited in search report | | Publication date | Patent family member(s) | | Publication date |
|---|---|---|---|---|---|
| US 2016055746 | A1 | 25-02-2016 | US 2015213713 A1 | | 30-07-2015 |
| | | | US 2016055746 A1 | | 25-02-2016 |
| US 2020372793 | A1 | 26-11-2020 | EP 3732665 A1 | | 04-11-2020 |
| | | | IL 275730 A | | 31-08-2020 |
| | | | US 2020372793 A1 | | 26-11-2020 |
| | | | WO 2019130299 A1 | | 04-07-2019 |
| US 2023031158 | A1 | 02-02-2023 | CN 115691163 A | | 03-02-2023 |
| | | | EP 4125072 A1 | | 01-02-2023 |
| | | | JP 2023018227 A | | 08-02-2023 |
| | | | US 2023031158 A1 | | 02-02-2023 |
| US 2017301233 | A1 | 19-10-2017 | CN 107305737 A | | 31-10-2017 |
| | | | DE 102017107794 A1 | | 19-10-2017 |
| | | | GB 2549506 A | | 25-10-2017 |
| | | | US 2017301233 A1 | | 19-10-2017 |
| EP 0155108 | A2 | 18-09-1985 | NONE | | |
| US 2020013280 | A1 | 09-01-2020 | BR 102017006860 A2 | | 30-10-2018 |
| | | | CO 2019008299 A2 | | 21-10-2019 |
| | | | EP 3608890 A1 | | 12-02-2020 |
| | | | PE 20200315 A1 | | 11-02-2020 |
| | | | US 2020013280 A1 | | 09-01-2020 |
| | | | WO 2018184079 A1 | | 11-10-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2605991 A
- CN 114419896 A